# EUROPÄISCHE PATENTANMELDUNG

(11) **EP 2 423 542 A1**
(43) Veröffentlichungstag der Anmeldung: **29.02.2012**
(21) Anmeldenummer: 10174117.1
(22) Anmeldetag: 26.08.2010
(51) Int. Cl.: F16J 15/44

(54) **Dichtungselement für eine Strömungsmaschine**

(71) Anmelder: SIEMENS AKTIENGESELLSCHAFT, 80333 München (DE)
(72) Erfinder: Gerlicher, Andreas, 200030, Shanghai (CN); Wechsung, Michael, 45470, Mülheim an der Ruhr (DE); Weltersbach, Dirk, 44805, Bochum (DE)

(57) **Zusammenfassung**

Die Erfindung betrifft ein Dichtungselement (5) zur Anordnung zwischen einem ersten (2) und einem zweiten Bauteil (4), wobei das Dichtungselement (5) eine mittels einer Nut (21) geteilte Berührungsfläche (8) sowie eine strömungstechnische Verbindung (19) zu dieser aufweist, was zu einer geringeren Reibung zwischen dem Dichtungselement (5) und dem zweiten Bauteil (4) führt.

## Beschreibung

Die Erfindung betrifft ein Dichtungselement zur Anordnung zwischen einem ersten und einem zweiten Bauteil, wobei das Dichtungselement eine Berührungsfläche aufweist, die zum Anlegen an dem zweiten Bauteil ausgelegt ist.

Im Strömungsmaschinenbau und ähnlichen technischen Gebieten wie beispielsweise in Regelventilen von Dampfturbinen, müssen Räume unterschiedlichen Drucks gegeneinander abgedichtet werden. Ziel ist es dabei, die Leckmenge, die zwischen diesen Räumen auftritt, möglichst stark zu reduzieren.

Häufig werden hierfür Kolbenringe als statische Dichtungen eingesetzt, die dadurch gekennzeichnet sind, dass keine Relativbewegung zwischen den Begrenzungen der Räume auftritt. Auch als dynamische Dichtung werden Kolbenringe verwendet, wobei hier eine Relativbewegung zwischen der Dichtung und einem anliegendem Bauteil auftritt. Bei einem Einsatz von Kolbenringen in Turbineneinlassventilen von Dampfturbinen ist dies zum Beispiel bei Kolbenringen zwischen einem bewegbaren Stellventilkegel und einer Führungsbuchse der Fall. Bei dynamischen Dichtungen kann neben der Dichtheit allerdings zusätzlich die Anforderung bestehen, auch die Reibkraft zwischen der Dichtung und dem daran angrenzenden Bauteil gering zu halten. Bei dem genannten Beispiel von Kolbenringen als Dichtung zwischen dem Stellventilkegel eines Turbineneinlassventils und einer Führungsbuchse soll der Bereich zwischen Kolbenring und Buchse derart ausgebildet sein, dass die Kolbenringreibung möglichst gering ist, da der Antrieb des Stellventilkegels die auftretende Reibkraft am Kolbenring überwinden muss. Bei hoher Reibkraft muss der Antrieb deshalb entsprechend stärker dimensioniert werden. Vorteilhaft ist es deshalb in diesem und in vergleichbaren Fällen, über eine Dichtungstechnologie zu verfügen, bei der die Reibkräfte, z. B. in der Kolbenringführung, stark herabsetzt sind, wobei die Dichtwirkung noch hinreichend sichergestellt ist.

Es ist daher Aufgabe der Erfindung, ein Dichtungselement anzugeben, dass an einem Dichtungspartner entlang führt und eine geringere Reibung aufweist.

Die Aufgabe wird gelöst durch ein Dichtungselement zur Anordnung zwischen einem ersten und einem zweiten Bauteil, wobei das Dichtungselement eine Berührungsfläche aufweist, die zum Anlegen an dem zweiten Bauteil ausgebildet ist, wobei eine Nut die Berührungsfläche teilt.

Die Nut ist durch geeignete konstruktive Maßnahmen mit einem raumhohen Druck verbunden.

Das Dichtungselement ist demnach zur Anordnung zwischen einem ersten und einem zweiten Bauteil ausgebildet. Darüber hinaus ist das Dichtungselement zum Anlegen an dem zweiten Bauteil ausgebildet, wobei eine Berührungsfläche beim Dichtungselement entsteht, das mit dem zweiten Bauteil in Berührung steht. An dieser Berührungsfläche entstehen Reibkräfte, die erfindungsgemäß dadurch vermindert werden sollen, dass die Berührungsfläche eine Nut aufweist, die derart ausgebildet ist, dass diese die Berührungsfläche teilt. Die Nut ist mit einem Raum hohen Drucks verbunden. Hierdurch wird die Kontaktkraft vom Dichtungselement auf das zweite Bauteil, die auf der Berührungsfläche wirkt, derart geändert, dass bei Relativbewegung zwischen dem Bauteil 1 und Bauteil 2 eine geringere Reibung entsteht.

Vorteilhafte Weiterbindungen sind in den Unteransprüchen angegeben.

In einer ersten vorteilhaften Weiterbildung ist das Dichtungselement zum Abdichten eines ersten Raumes mit dem Druck p₁ und eines Raumes mit Druck p₂ ausgebildet, wobei p₁ > p₂ ist und das Dichtungselement eine strömungstechnische Verbindung zwischen dem ersten Raum und der Nut aufweist. Durch die Verbindung des ersten Raumes, der mit dem Druck p₁ beaufschlagt ist, mit der Nut, wird die Kontaktkraft zwischen dem Dichtungselement und dem zweiten Bauteil reduziert, wodurch die Reibkraft zwischen dem Dichtungselement und dem Bauteil 2 bei Relativbewegung zwischen beiden verringert wird. Der Antrieb für solch eine Dichtungsanordnung kann daher geringer dimensioniert werden.

In einer weiteren vorteilhaften Weiterbildung verläuft die strömungstechnische Verbindung im Wesentlichen orthogonal zur Berührungsfläche. Da die strömungstechnische Verbindung den ersten Raum mit dem Druck p₁ und der Nut verbindet, führt dies zu einer möglichen Strömung von dem ersten Raum mit dem Druck p₁ zur Nut, falls in der Nut ein niedrigerer Druck als p₁ herrscht. In einer alternativen Ausführungsform verläuft die strömungstechnische Verbindung im Wesentlichen parallel zur Berührungsfläche.

In einer wesentlichen vorteilhaften Weiterbildung ist das Dichtungselement als Kolbenring ausgebildet. Des Weiteren ist ebenfalls vorteilhaft die Berührungsfläche rotationssymmetrisch ausgebildet. Solche Dichtungselemente werden beispielsweise in Turbineneinlassventilen verwendet, die im Dampfturbinenbau Anwendung finden. Der Kolbenring ist dabei an dem ersten Bauteil angeordnet, wobei dieses erste Bauteil einen Ventilkegel darstellen kann. Das zweite Bauteil ist demgegenüber als Buchse ausgebildet.

In einer vorteilhaften Weiterbildung ist die Nut entlang einer Umfangsrichtung ausgebildet. Die Nut ist im Wesentlichen in der Mitte des Kolbenringes ausgebildet, wobei links und rechts der Nut jeweils Material stehen bleibt. Dadurch werden die übertragenen Kräfte im Wesentlichen symmetrisch ausgebildet.

Ein Ausführungsbeispiel der Erfindung wird anhand der Figuren näher beschrieben.

Es zeigen:
- FIG 1: eine Querschnittsansicht durch einen Ausschnitt eines Ventils,
- FIG 2: eine Querschnittsansicht eines Dichtungselementes gemäß dem Stand der Technik,
- FIG 3: eine Querschnittansicht eines Dichtungselementes gemäß einer ersten Ausführungsform,
- FIG 4: eine Querschnittansicht eines Dichtungselementes gemäß einer zweiten Ausführungsform,
- FIG 5: eine Ansicht der Ausführungsform gemäß FIG 4.

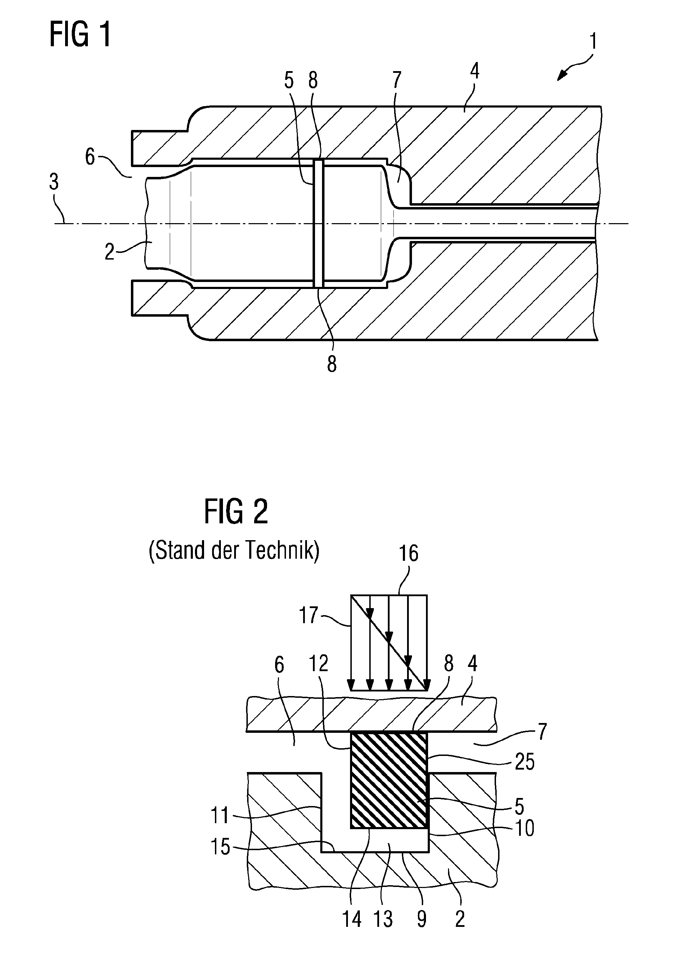

Die FIG 1 zeigt einen Ausschnitt eines Ventils 1. Dieses Ventil 1 wird beispielsweise im Strömungsmaschinenbau, z.B. in Dampfturbinen eingesetzt. Das Ventil 1 umfasst ein erstes Bauteil 2, das als Ventilspindel ausgebildet ist. Dieses erste Bauteil 2 ist um eine Rotationsachse 3 rotationssymmetrisch ausgebildet. Das erste Bauteil 2 ist innerhalb eines zweiten Bauteils 4, das als Buchse ausgebildet ist und als Führung für das erste Bauteil 2 dient, bewegbar angeordnet. Die Bewegung des ersten Bauteils 2 erfolgt hierbei im Wesentlichen entlang der Rotationsachse 3. Das erste Bauteil 2 umfasst ein als Kolbenring ausgebildetes Dichtungselement 5. Das Dichtungselement 5 trennt einen ersten Raum 6 von einem zweiten Raum 7. Im ersten Raum 6 herrscht ein erster Druck p₁ und im zweiten Raum 7 eine zweiter Druck p₂. Das Dichtungselement 5 ist zur Anordnung zwischen dem ersten Bauteil 2 und dem zweiten Bauteil 4 ausgebildet. Um eine gute Dichtheit zu gewährleisten, weist das Dichtungselement 5 eine Berührungsfläche 8 auf, welche zum Anlegen an dem zweiten Bauteil 4 ausgebildet ist.

Die FIG 2 zeigt eine Querschnittsansicht durch ein Dichtungselement 5 gemäß dem Stand der Technik. Das Dichtungselement 5 ist hierbei in einer Kolbenringnut 9 angeordnet. Der Druck p₁ im ersten Raum 6 ist größer als der Druck p₂ im zweiten Raum 7. Daher liegt das Dichtungselement 5 an der rechten Tragschulter 10 der Kolbenringnut 9 an. Dadurch bildet sich ein Raum zwischen der linken Tragschulter 11 und einer linken Kolbenringseitenfläche 12. Der im ersten Raum 6 ausgebildete Druck kann sich daher auch in einem Bodenraum 13 ausbilden, der zwischen einer unteren Bodenfläche 14 des Dichtungselements 5 und einer Kolbenringnutoberfläche 15 angeordnet ist. Der in diesem Bodenraum 13 herrschende Druck, der im Wesentlichen identisch ist mit dem Druck p₁ im ersten Raum 6, führt zu einer Kraftübertragung des Dichtungselements 5 über die Berührungsfläche 8 auf das zweite Bauteil 4. Eine Dichtheit zwischen dem ersten Raum 6 und dem zweiten Raum 7 ist dadurch gewährleistet.

Die mit dem Druck p₁ im Bodenraum 13 ausgeübte Kraft führt somit zu einer radial nach außen gerichteten Kraft auf das Dichtungselement 5. Der auf das Dichtungselement 5 im Bodenraum 13 wirkenden Kraft muss eine gleich große entgegengesetzt gerichtete Kraft entgegenwirken. Diese wirkt auf die Berührungsfläche 8 des Dichtungselementes 5 als äußere Kraft und setzt sich im Wesentlichen aus zwei Anteilen zusammen. Der eine Anteil entsteht durch den Fluiddruck p1, der in der Berührungsfläche von seinem Anfangswert p1 ausgehend, auf niedrigere Werte abgebaut wird. Das Diagramm 16 gibt den Gedanken wieder, dass dieser Fluiddruck 17 in erster Näherung linear von dem ersten Raum 6 zum zweiten Raum 7 abfällt. Zum Ausgleich der im Bodenraum 13 auf das Dichtungselement 5 ausgeübten Kraft wirkt zusätzlich eine Kontaktpressung zwischen dem Dichtelement und dem zweiten Bauteil 4 als zweiter Anteil. Die Resultierende Kraft auf das Dichtungselement 5 aus dieser Kontaktpressung entspricht bei dem angenommenen linearen Druckverlauf 17 der Dreiecksfläche über dem Druckverlauf 17 im Diagramm 16.

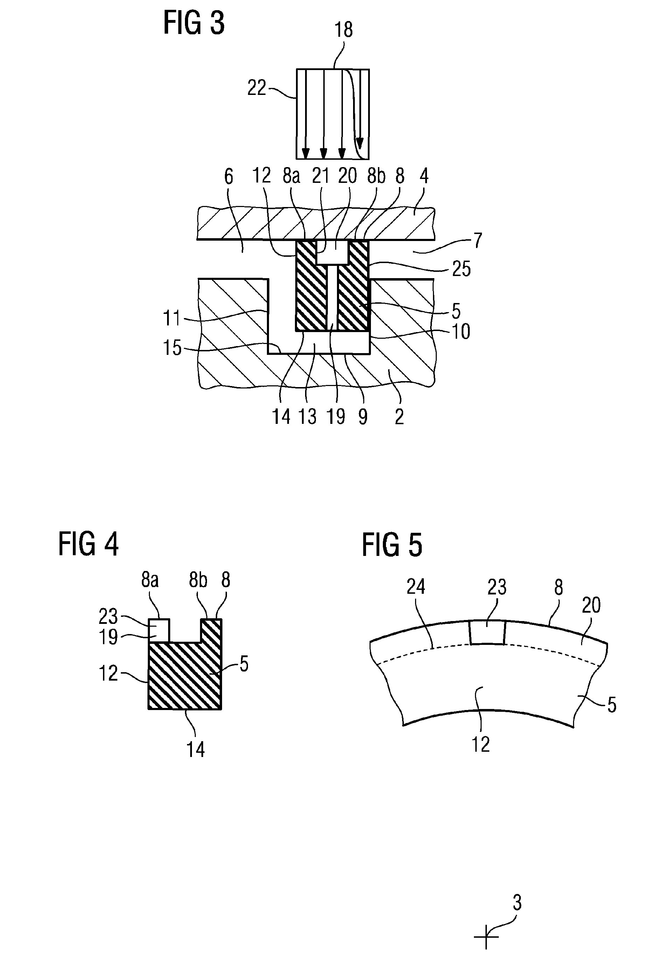

Die FIG 3 zeigt einen Schnitt durch ein erfindungsgemäß ausgebildetes Dichtungselement 5. Der Unterschied zu der Ausführungsform gemäß FIG 2 besteht darin, dass eine strömungstechnische Verbindung 19 in dem Dichtungselement 5 angeordnet ist und den ersten Raum 6 mit der Nut 21 strömungstechnisch verbindet. Ein im ersten Raum 6 herrschender Druck setzt sich somit über den Bodenraum 13 und der strömungstechnischen Verbindung 19 in einen Nutraum 20 fort. Der Nutraum 20 wird gebildet durch eine Nut 21 in dem Dichtungselement 5, der die Berührungsfläche 8 teilt. Die Teilung der Berührungsfläche 8 ist symmetrisch, das bedeutet, dass eine linke Teilberührungsfläche 8a im Wesentlichen gleich groß ist wie eine rechte Teilberührungsfläche 8b. Die Nut 21 ist hierbei im Wesentlichen rotationssymmetrisch in Umfangsrichtung zur Rotationsachse 3 ausgebildet. In der in FIG 3 gezeigten Ausführungsform ist die strömungstechnische Verbindung 19 im Wesentlichen orthogonal zur Berührungsfläche 8 ausgebildet. Das bedeutet, dass die strömungstechnische Verbindung 19 im Wesentlichen radial nach außen gerichtet ist. Dies könnte beispielsweise durch radial orientierte Bohrungen erfolgen.

Die Nut 21 und die strömungstechnische Verbindung 19 führen dazu, dass die Kontaktkraft zwischen dem Dichtungselement 5 und dem zweiten Bauteil 4, die sich nun alleine auf den Teil 8b der Berührfläche beschränkt, geringer ausfällt als im Vergleich zu der Ausführungsform gemäß FIG 2. Dadurch wird auch die Reibkraft bei Relativbewegung zwischen dem Dichtungselement 5 zusammen mit dem ersten Bauteil 2 gegenüber dem zweiten Bauteil 4 entsprechend niedriger ausfallen als im Vergleich zu der Ausführungsform gemäß Fig. 2.

Das Diagramm 18 soll den geänderten Fluiddruck 22 entlang der Rotationsachse 3 darstellen. Es ist zu sehen, dass die Kontaktpressung lediglich an der rechten Teilberührungsfläche 8b einen hohen Wert aufweist und dadurch eine Reibung lediglich in diesem Bereich ins Gewicht fällt.

Die FIG 4 zeigt eine alternative Ausführungsform des Dichtungselements 5. Der Unterschied zur Ausführungsform gemäß FIG 3 besteht darin, dass die strömungstechnische Verbindung 19, die den ersten Raum 6 mit dem Nutraum 20 verbindet, im Wesentlichen parallel zur Berührungsfläche 8 verläuft. Die strömungstechnische Verbindung 19 ist daher nicht, wie in FIG 3 gezeigt, in radialer Richtung als radiale Bohrung ausgebildet, sondern als parallel ausgeführte Strömungsnut 23 ausgebildet. Diese Strömungsnut 23 kann durch Fräsen eingearbeitet werden und führt zu einer rechteckig oder trapezförmigen Form in der Querschnittsansicht, wie das in der FIG 5 deutlich zu sehen ist. Es können mehrere in Umfangsrichtung verteilte Strömungsnuten 23 im Dichtungselement 5 angeordnet sein.

Die FIG 5 zeigt eine Ansicht des Dichtungselementes 5. Die gestrichelte Linie 24 stellt den Nutraum 20 dar, der in Umfangsrichtung rotationssymmetrisch ausgebildet ist. Die FIG 5 zeigt einen Blick auf die linke Kolbenringseitenfläche 12. Durch die geänderte Ausführungsform des Dichtungselementes 5 mit einem Nutraum 20 wird die Reibung zwischen dem Dichtungselement 5 über die Berührungsfläche 8 mit dem zweiten Bauteil 4 deutlich verringert.

## Patentansprüche

1. Dichtungselement (5) zur Anordnung zwischen einem ersten (2) und einem zweiten Bauteil (4) ausgebildet,
wobei das Dichtungselement (5) eine Berührungsfläche (8) aufweist, die zum Anlegen an dem zweiten Bauteil (4) ausgebildet ist,
**gekennzeichnet durch** eine Nut (21), die die Berührungsfläche (8) teilt.

2. Dichtungselement (5) nach Anspruch 1,
wobei das Dichtungselement (5) zum Abdichten eines ersten (6) Raumes mit dem Druck p1 und eines zweiten Raumes (7) mit dem Druck p₂ ausgebildet ist,
wobei p₁ > p₂ ist,
wobei das Dichtungselement (5) eine strömungstechnische Verbindung (19) zwischen dem ersten Raum (6) und der Nut (21) aufweist.

3. Dichtungselement (5) nach Anspruch 2,
wobei die strömungstechnische Verbindung (19) im Wesentlichen orthogonal zur Berührungsfläche (8) verläuft.

4. Dichtungselement (5) nach Anspruch 2,
wobei die strömungstechnische Verbindung (19) im Wesentlichen parallel zur Berührungsfläche (8) verläuft.

5. Dichtungselement (5) nach einem der vorhergehenden Ansprüche,
wobei das Dichtungselement (5) als Kolbenring ausgebildet ist und der Berührungsfläche (8) rotationssymmetrisch ausgebildet ist.

6. Dichtungselement (5) nach Anspruch 5,
wobei der Kolbenring zur Abdichtung eines Spaltes zwischen einem ersten und einem zweiten Bauteil ausgebildet ist.

7. Dichtungselement (5) nach Anspruch 5,
wobei der Kolbenring zur Abdichtung eines Spaltes zwischen einem Kolben und einem Ring ausgebildet ist.

8. Dichtungselement (5) nach Anspruch 5 oder 7,
wobei die Nut (21) entlang einer Umfangsrichtung ausgebildet ist.

9. Dichtungselement (5) nach einem der vorhergehenden Ansprüche,
wobei das Dichtungselement (5) zum Einsatz in einer Dampfkraftanlage ausgebildet ist.
